(19) Europäisches Patentamt
European Patent Office
Office européen des brevets

(11) **EP 4 632 387 A1**

(12) **EUROPEAN PATENT APPLICATION**
published in accordance with Art. 153(4) EPC

(43) Date of publication:
**15.10.2025 Bulletin 2025/42**

(21) Application number: **22967435.3**

(22) Date of filing: **07.12.2022**

(51) International Patent Classification (IPC):
**G01N 37/00** (2006.01)     **G01N 35/02** (2006.01)

(52) Cooperative Patent Classification (CPC):
**G01N 35/02; G01N 37/00**

(86) International application number:
**PCT/JP2022/045024**

(87) International publication number:
**WO 2024/121959 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HITACHI HIGH-TECH CORPORATION**
**Tokyo 105-6409 (JP)**

(72) Inventors:
• **KAMURA Yoshio**
**Tokyo 100-8280 (JP)**
• **NAKAGAWA Tatsuo**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **SAMPLE SOLUTION SEPARATION METHOD, SAMPLE SOLUTION SEPARATION DEVICE, AND SAMPLE SOLUTION SEPARATION APPARATUS**

(57)     In order to realize a highly robust sample solution separation technique using a liquid photocurable resin in a microdevice for biological sample analysis, the present disclosure proposes a sample solution separation method in a microdevice for biological sample analysis, the method including the steps of introducing a sample solution into a plurality of fractions included in the microdevice for biological sample analysis, introducing a liquid photocurable resin into a flow path of the microdevice for biological sample analysis and covering openings of the plurality of fractions with the liquid photocurable resin to separate the plurality of fractions into which the sample solution has been introduced, and irradiating the microdevice for biological sample analysis into which the liquid photocurable resin has been introduced with light to solidify the liquid photocurable resin (see FIG. 2).

## FIG. 2

INTRODUCTION OF LIQUID PHOTOCURABLE RESIN → PHOTOPOLYMERIZATION REACTION → SEALING BY SOLIDIFICATION OF PHOTOCURABLE RESIN

EP 4 632 387 A1

**Description**

Technical Field

The present disclosure relates to a sample solution separation method, a sample solution separation device (microdevice), and a sample solution separation apparatus.

Background Art

Conventionally, PCR or real-time PCR has been used for genetic testing. In these techniques, there has been a problem that the measurement accuracy is low when the measurement target (nucleic acid) is a trace amount. In order to solve this problem, digital PCR technology has recently attracted attention. In the digital PCR technology, a sample containing a nucleic acid to be detected is separated into a large number of minute regions, and PCR is performed on each minute region. Then, the type of nucleic acid present in each minute region is discriminated by discriminating between a compartment containing the nucleic acid to be detected and a compartment not containing the nucleic acid to be detected by fluorescence intensity. For example, PTL 1 discloses, as a DNA detection method using digital PCR, a DNA detection method for measuring a melting temperature between DNA and a fluorescently labeled probe in a droplet containing DNA and a fluorescently labeled probe that hybridizes to DNA.

In a microdevice for PCR, an ultraviolet curable resin is often used as one of constituent elements. For example, PTL 2 discloses that in a microfluidic chip capable of easily pipetting a small amount of sample, an ultraviolet curable resin is used as an example of an adhesive between a cover of a microdevice and a substrate. PTL 3 discloses that in a reaction liquid container for promoting a nucleic acid amplification reaction including a PCR reaction or an LCR reaction, the container is sealed by introducing an ultraviolet curable resin into a flow path in the container.

In a microfluidic device for digital PCR, oil is often used as an application for separating a sample into a minute region. PTL 4 discloses that in a microarray device for separating a minute amount of sample containing nucleic acid, solution separation is performed by introducing a sample into a well and then covering the well using a hydrophobic substance such as mineral oil or silicone oil. Since the sample in the well is hydrophilic and the oil or the like is hydrophobic, it is possible to separate the sample solution into each well without mixing due to relationship between water and oil.

Citation List

Patent Literature

PTL 1: JP 2018-108063 A
PTL **2:** JP 2011-163946 A
PTL **3:** WO 2008/146754 A
PTL 4: US 9,518,299 B2

Summary of Invention

Technical Problem

When PCR or digital PCR is performed using the microdevice for biological sample analysis, it is important that the biological sample solution confined in the well does not leak regardless of the influence of heating during the thermal cycle. At present, oil, which is a hydrophobic substance, is often used as a material for sealing a biological sample solution in a well.

However, when the biological sample solution in the well is heated to about 95°C during the thermal cycle, bubbles are generated in the well, and the solution in the well may push away the covering oil and leak out of the well. This leads to contamination to surrounding wells, and thus such a situation needs to be avoided. Therefore, a liquid photocurable resin can be expected as a sealing material in place of oil.

However, in general terms of the liquid photocurable resin, there are various limitations on the liquid photocurable resin that can be used as a microdevice for biological sample analysis. For example, knowledge of the viscosity and the property of PCR inhibition of the photocurable resin is very important. The former is important for facilitating introduction into a microfluidic device, and the latter is important for PCR of a biological sample without being affected by a liquid photocurable resin.

In view of such a situation, the present disclosure proposes a highly robust (highly robust means that the sample solution in the well (fraction) does not leak out) sample solution separation technique using a liquid photocurable resin in a microdevice for biological sample analysis.

Solution to Problem

In order to solve the above problems, the present disclosure proposes a sample solution separation method in a microdevice for biological sample analysis, the method including the steps of introducing a sample solution into a plurality of fractions included in the microdevice for biological sample analysis, introducing a liquid photocurable resin into a flow path of the microdevice for biological sample analysis and covering openings of the plurality of fractions with the liquid photocurable resin to separate the plurality of fractions into which the sample solution has been introduced, and irradiating the microdevice for biological sample analysis into which the liquid photocurable resin has been introduced with light to solidify the liquid photocurable resin.

Further characteristics relating to the present disclosure are revealed from the description of the present specification and attached drawings. Also, aspects of the present disclosure are achieved and realized by elements and combinations of various elements, and the following detailed description and aspects of the appended claims.

The description of the present specification is merely illustrative and is not intended to limit the scope of the claims or the application of the present disclosure by no means.

Advantageous Effects of Invention

According to the technology of the present disclosure, it is possible to achieve a highly robust (highly robust means that the sample solution in the well (fraction) does not leak out) sample solution separation technique using a liquid photocurable resin in a microdevice for biological sample analysis.

Brief Description of Drawings

FIG. 1 is a diagram illustrating an outline of a curing process of a liquid photocurable resin.

FIG. 2 is a diagram illustrating a method for introducing a liquid photocurable resin into a microdevice and a property change of the liquid photocurable resin by light irradiation after introduction.

FIG. 3 is a diagram illustrating a configuration example of a microdevice for biological sample analysis according to Example 1.

FIG. 4 is a diagram illustrating a state in which a liquid photocurable resin is introduced into the microdevice illustrated in FIG. 3.

FIG. 5 is a diagram for explaining a result of performing digital PCR on a microdevice to which a highly robust sample solution separation method is applied.

FIG. 6 is a diagram illustrating a configuration example of a microdevice for biological sample analysis according to Example 2 in which there is no other flow path connecting a flow path and a well and they are directly connected.

FIG. 7 is a diagram illustrating a result of performing digital PCR measurement after introducing a sample solution and a liquid photocurable resin into the microdevice for biological sample analysis according to Example 2.

FIG. 8 is a diagram illustrating a configuration example of a microdevice according to Example 3.

FIG. 9 is a diagram illustrating a result of performing digital PCR measurement after introducing a sample solution and a liquid photocurable resin into the microdevice for biological sample analysis according to Example 3.

FIG. 10 is a diagram for explaining that when the viscosity of the liquid photocurable resin is too high, the liquid photocurable resin is not introduced into the flow path of the microdevice.

FIG. 11 is a diagram for explaining relationship between the liquid specific gravity of the liquid photocurable resin and the sample solution.

FIG. 12 is a table showing a curing method, viscosity, liquid specific gravity, and propriety of device introduction for commercially available liquid photocurable resins sold by a plurality of manufacturers.

FIG. 13 is a diagram illustrating a scheme for evaluating the presence or absence of PCR inhibition for the commercially available liquid photocurable resins (upper diagram) and results of real-time PCR measurement (lower diagram).

FIG. 14 is a diagram illustrating the results of real-time PCR measurement for evaluating the presence or absence of PCR inhibition for hydrophilic liquid photocurable resins.

FIG. 15 is a diagram illustrating the results of real-time PCR measurement for evaluating the presence or absence of PCR inhibition for hydrophobic liquid photocurable resins.

FIG. 16 is a diagram illustrating a schematic configuration example of a sample solution separation apparatus 1600.

FIG. 17 is a diagram illustrating a schematic cross-sectional configuration example of an improved microdevice.

Description of Embodiments

An embodiment of the present disclosure proposes a highly robust sample solution separation technique using a liquid photocurable resin in a microdevice for biological sample analysis, and proposes a sample solution separation method in which the liquid photocurable resin does not adversely affect PCR or digital PCR.

Hereinbelow, examples and embodiments of the present disclosure will be described with reference to the attached drawings. In the attached drawings, functionally same elements may be denoted by the same numbers. The attached drawings illustrate specific embodiments and examples based on the principle of the present disclosure, and these are for understanding the present disclosure, and are certainly not used for restrictively interpreting the present disclosure.

The present embodiment is described in sufficient detail for a person skilled in the art to implement the present disclosure, but it is to be understood that other implementations and aspects are possible, and changes in configuration and structure and replacement of various elements are possible without departing from the scope and spirit of the technical idea of the present disclosure. Therefore, the following description is not to be construed as being limited thereto.

<Examples of sample solution separation>

(Example 1)

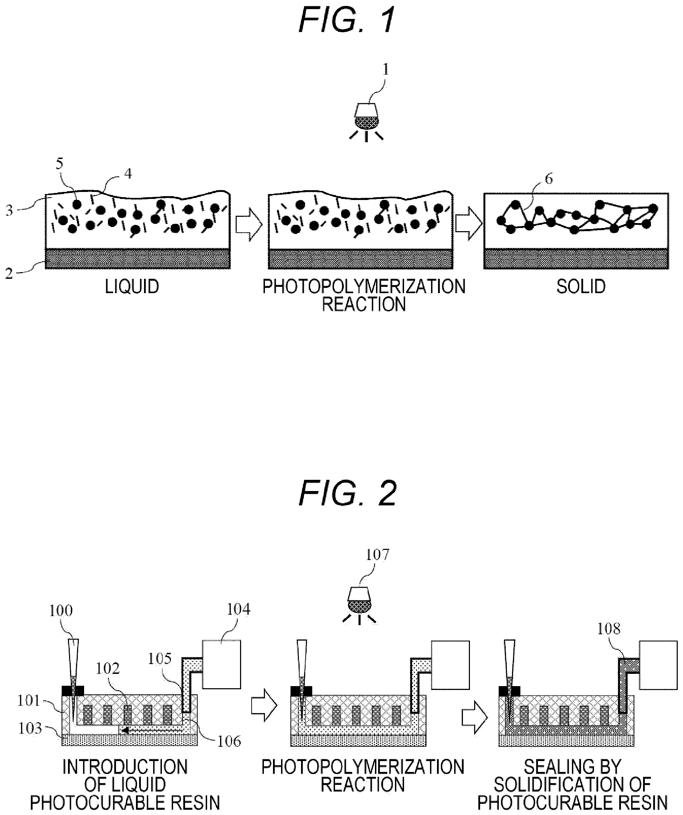

Example 1 will be described with reference to FIGS. 1 to 5. Example 1 shows an overview of a liquid photocurable resin and that highly robust sample solution separation is possible by introducing the liquid photocurable resin into a microdevice.

(i) Curing process of liquid photocurable resin

FIG. 1 is a diagram illustrating an outline of a curing process of a liquid photocurable resin. In order to cure a liquid photocurable resin, a light source 1 is required. First, a coating layer 3 is formed (prepared) on a substrate 2. The coating layer 3 contains a liquid photocurable resin 4 and a photoinitiator 5. The coating layer 3 at this time is liquid, and the solution moves due to inclination or the like. When the coating layer 3 is irradiated with light by the light source 1, the liquid photocurable resin 4 and the photoinitiator 5 start a photopolymerization reaction. By this photopolymerization reaction, the liquid photocurable resin 4 is crosslinked between resins to form a polymer structure 6 based on the liquid photocurable resin 4.

In order to promote the photopolymerization reaction, the light source 1 desirably emits light in the vicinity of the absorption wavelength of the photoinitiator 5. Therefore, it is suitable to use light with a wavelength of 250 to 600 nm. However, the nucleic acid to be measured may be broken at a wavelength in the ultraviolet region. Therefore, it is preferable to use a wavelength that does not break the nucleic acid. In consideration of the condition of not breaking the nucleic acid, light with a wavelength of 350 to 600 nm can be used. Examples of suitable light source include lasers, LEDs, mercury lamps, deuterium lamps, tungsten lamps, xenon lamps, and halogen lamps.

(ii) Highly robust sample solution separation

FIG. 2 is a diagram illustrating a method for introducing a liquid photocurable resin into a microdevice and a property change of the liquid photocurable resin by light irradiation after introduction. FIG. 2 illustrates a state after the sample solution is first introduced into the microdevice. The sample solution is introduced into each well (it is not limited to the form of the well, and may be a fraction) from an inlet portion 106 of the microdevice.

According to FIG. 2, the microdevice after introduction of the sample solution includes an outlet portion 100 (may be a state in which a surplus sample solution is accumulated), a substrate 101, wells 102 into which the sample solution is introduced, and a cover 103 of the substrate. A liquid photocurable resin 105 is introduced into a flow path of the microdevice from the inlet portion 106 of the microdevice using a pressure application device 104. At this time, each sample solution in the well is sealed with the introduced liquid photocurable resin. The introduction of the liquid photocurable resin may be started in a state where the sample solution remains in the flow path portion of the microdevice, or the introduction of the liquid photocurable resin may be started after the sample solution is discharged from the flow path portion.

Next, the introduced liquid photocurable resin is irradiated with light from a light source 107. This accelerates the photopolymerization reaction. Then, the liquid photocurable resin 105 that has been introduced is modified into a solid photocurable resin 108, whereby each solution in the well is changed from being sealed with the liquid material to being sealed with the solid material. It is expected that the robustness of the sample solution in the well is increased by changing from the sealing with liquid to solid as described above. Examples of the pressure application device 104 include vacuum pumps such as a syringe pump, a diaphragm pump, and a rotary pump, and compressors. As a material of the substrate 101 and the cover 103, glass, a resin such as a cycloolefin polymer, a cycloolefin copolymer, or polypropylene, a semiconductor such as silicon, a metal such as copper or zinc, or the like can be used.

(iii) Example of shape (configuration) of microdevice

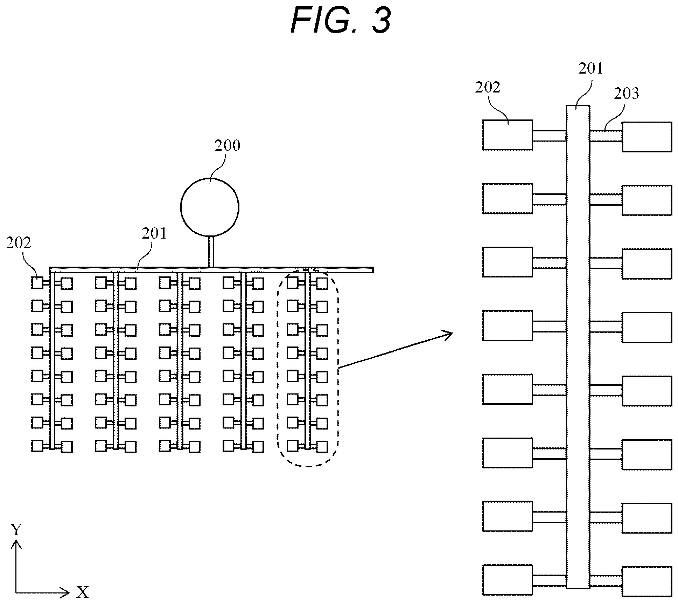

FIG. 3 is a diagram illustrating a configuration example of a microdevice for biological sample analysis according to Example 1. The microdevice is configured by separating a flow path and a well. FIG. 3 illustrates a plurality of branch well groups (left diagram) and a configuration in which a part of the branch well groups is enlarged (right diagram).

The microdevice includes an inlet portion 200, a main flow path portion 201, a plurality of wells 202 (fractions), and a sub flow path portion 203 connecting the main flow path portion 201 and each well 202. As illustrated in FIG. 3, the plurality of wells 202 is arranged to spread on the XY plane. The sample solution is introduced from the inlet portion 200, passes through the main flow path 201 and each sub flow path 203, and is introduced into the wells 202. The size of the well 202 is wide from a nanometer scale to a millimeter scale, and the shape may be various shapes such as a quadrangle, a circle, and a hexagon. The number of the wells 202 is at least 1 or more, and is 3 million or less at most.

(iv) Introduction of liquid photocurable resin into microdevice

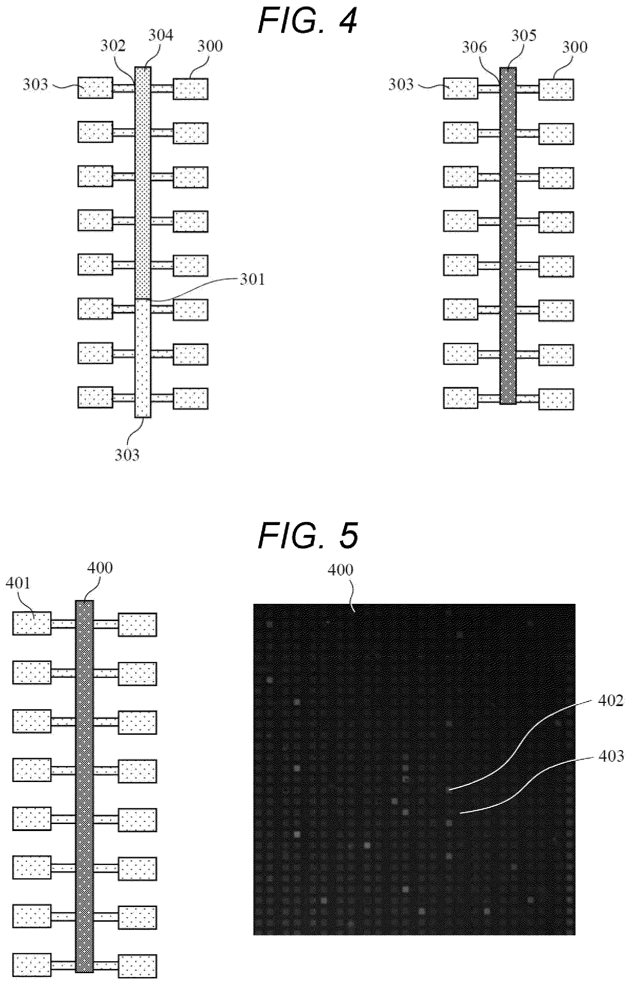

FIG. 4 is a diagram illustrating a state in which a liquid photocurable resin is introduced into the microdevice illustrated in FIG. 3. The left diagram of FIG. 4 illustrates an introduction process of the liquid photocurable resin. The right diagram of FIG. 4 illustrates the introduced liquid photocurable resin after solidification by light irradiation.

A liquid photocurable resin 304 introduced into the main flow path portion 201 (see FIG. 3) of the microdevice pushes out a sample solution 303 originally present in the main flow path portion 201. An interface 301 between the sample solution 303 and the liquid photocurable resin 304 on the main flow path portion 201 is present with respect to wells 300 into which the sample solution 303 is introduced. In a region where the liquid photocurable resin 304 has already been introduced into the main flow path portion 201, an interface 302 between the sample solution 303 in the well 202 and the liquid photocurable resin 304 in the main flow path portion 201 is observed. On the other hand, in a region where the liquid photocurable resin 304 has not been introduced yet, the sample solution 303 on the flow path is observed.

When the main flow path portion 201 in which the main flow path portion 201 is replaced from the sample solution 303 to the liquid photocurable resin 304 is irradiated with light, the liquid photocurable resin 304 of the main flow path portion 201 becomes a solid photocurable resin 305. At this time, the interface 302 between the sample solution 303 in the well 202 and the liquid photocurable resin 304 in the main flow path portion 201 changes to an interface 306 between the sample solution 303 in the well 202 and the solid photocurable resin 305 in the main flow path portion 201. That is, this means that the sample solution 303 in each well 202 is sealed with a solid substance instead of a liquid substance. This makes it possible to perform more highly robust sample separation than sealing with the liquid substance as in the prior art.

(v) PCR measurement result

Hereinafter, a result of performing digital PCR on a microdevice to which a highly robust sample solution separation method is applied will be described with reference to FIG. 5. By using the microdevice and the liquid photocurable resin according to Example 1, it is possible to perform measurement with highly robust sample solution separation and heating such as digital PCR.

The left diagram of FIG. 5 illustrates a state after the sample solution and the photocurable resin are introduced into the microdevice for biological sample analysis in which the flow path and the well are separated. The right diagram of FIG. 5 illustrates a result of performing digital PCR measurement with the microdevice. As described above, after a sample solution 401 is separated by a solid photocurable resin 400, in the microdevice, the solid photocurable resin 400 is present on the main flow path portion 201 (see FIG. 3), and the sample solution 401 is present in the well 202. In the digital PCR, the microdevice is subjected to PCR using a heating medium such as a thermal cycler. Then, PCR is promoted in the well in which the nucleic acid is present in each well, and PCR does not occur in the well in which the nucleic acid is not present. By introducing a fluorescently labeled probe into the sample solution in advance, only the well in which the PCR has occurred emits light at the time of fluorescence measurement.

In the right diagram of FIG. 5, light-emitting wells 402 and non-light-emitting wells 403 are observed. Therefore, this fluorescence observation result shows that digital PCR can be performed in a microdevice using a solid photocurable resin. In another experiment, it was found that, even when PCR is similarly performed by introducing a liquid medium such as oil into the flow path, a result of digital PCR cannot be obtained, and connection with adjacent wells and a state in which the solution is dispersed in the flow path are observed. Therefore, this result shows that this result was obtained by sealing the well into which the sample solution was introduced with the solid photocurable resin.

(Example 2)

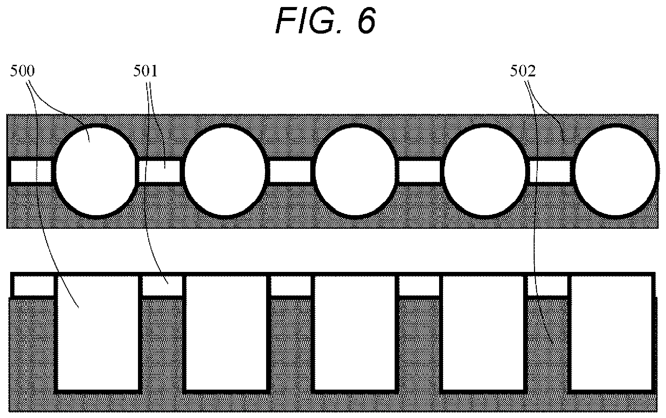

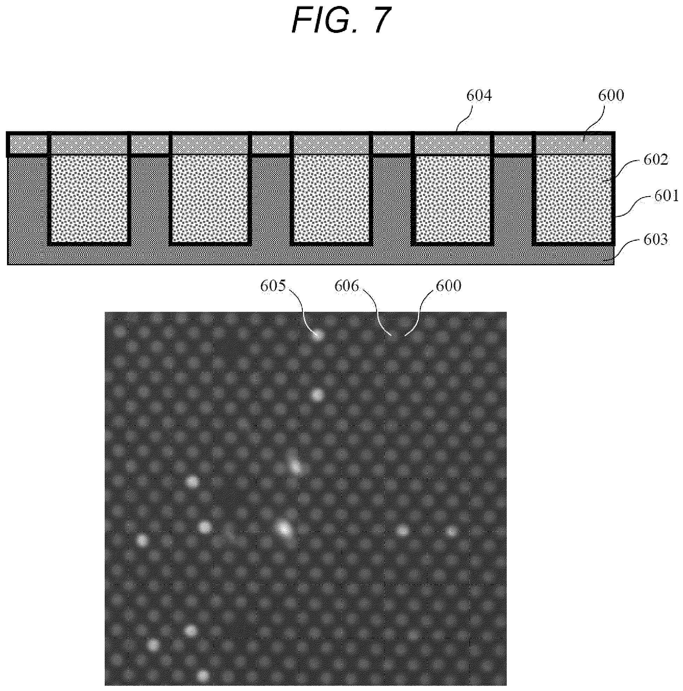

Example 2 will be described with reference to FIGS. 6 and 7. Example 2 describes a result of performing digital PCR measurement after introducing a sample solution and a liquid photocurable resin into a microdevice for biological sample analysis in which a flow path and a well are connected. According to Example 2, as Example 1, it is possible to perform measurement with highly robust sample solution separation and heating such as digital PCR.

(i) Configuration example of microdevice

FIG. 6 is a diagram illustrating a configuration example of a microdevice for biological sample analysis according to Example 2 in which there is no other flow path connecting a flow path and a well and they are directly connected. FIG. 6 illustrates a top configuration example of the microdevice (upper diagram) and a cross-sectional configuration example of the microdevice (lower diagram).

The microdevice according to Example 2 includes wells 500, flow paths 501, and a substrate 502. In Example 2, the wells 500 and the flow paths 501 are connected in a row, and the structure is slightly different from that of the microdevice according to Example 1 described above. The side surface portion and the bottom surface portion of the wells (fractions) 500 and the flow path portion 501 may be subjected to a hydrophilic treatment or a hydrophobic treatment. Specifically, the side surface portion and the bottom surface portion of the wells 500 may be subjected to a hydrophilic treatment and the flow paths 501 may be subjected to a hydrophobic treatment, or both may be subjected to a hydrophilic treatment.

(ii) PCR measurement result

FIG. 7 is a diagram illustrating a result of performing digital PCR measurement after introducing a sample solution and a liquid photocurable resin into the microdevice for biological sample analysis according to Example **2.** The upper diagram of FIG. 7 illustrates a state in which a sample solution 602 introduced into a well 601 of the microdevice is sealed with a solid photocurable resin 600. The lower diagram of FIG. 7 illustrates a result of actually performing PCR using the microdevice.

The solid photocurable resin 600 seals the sample solution 602 in the well 601. A flow path 604 and the well 601 are formed by processing a substrate 603. As a result of performing digital PCR on this microdevice, light-emitting wells 605 and non-light-emitting wells 606 were observed as in Example 1. Therefore, it is found that the presence or absence of the nucleic acid to be measured could be confirmed by fluorescence measurement. In addition, it can be seen that the solid photocurable resin 600 does not emit fluorescence during fluorescence measurement, and thus is observed to be dark. The substrate 603 is similarly observed to be dark. This shows that the autofluorescence of the solid photocurable resin 600 and the substrate 603 is low. In fluorescence measurement, fluorescence from an object other than the measurement target increases the background intensity, which makes highly accurate measurement difficult. Therefore, the substrate and the liquid photocurable resin to be used are desirably substances exhibiting low autofluorescence. Examples of the material having low autofluorescence for the substrate include cycloolefin polymer (COP), cycloolefin copolymer (COC), polydimethylsiloxane (PDMS), and metals such as gold, silver, copper, and zinc. In order for the solid photocurable resin 600 to exhibit low autofluorescence, a $\pi$ conjugated system such as a polycyclic aromatic hydrocarbon is not much present in the molecular skeleton of the solid photocurable resin 600, and cycloalkane, normal alkane, isoalkane, or the like is present.

(Example 3)

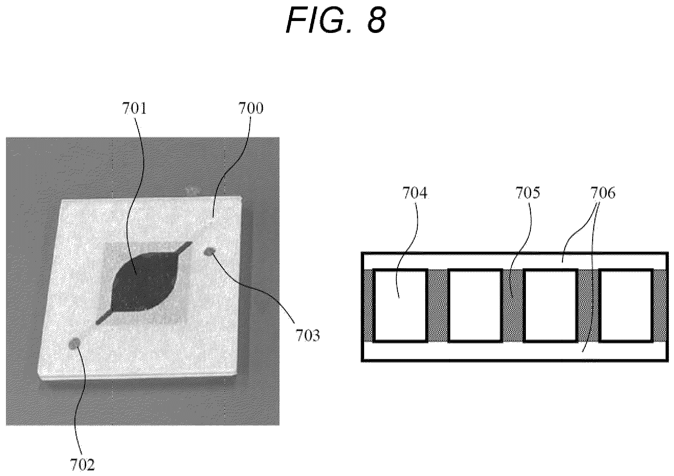

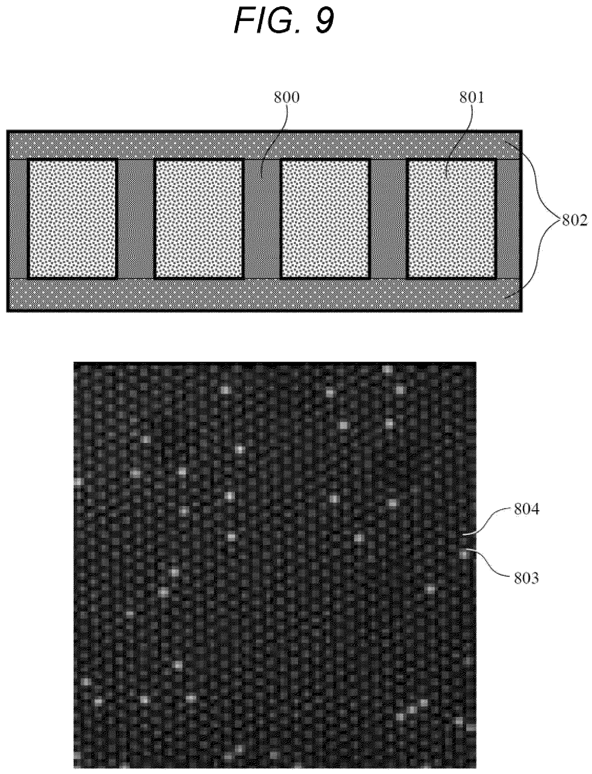

Example 3 will be described with reference to FIGS. 8 and 9. Example 3 describes a result of performing digital PCR measurement after introducing a sample solution and a liquid photocurable resin into a microdevice for biological sample analysis including a through-hole well. According to Example 3, as Examples 1 and 2, it is possible to perform measurement with highly robust sample solution separation and heating such as digital PCR.

(i) Configuration example of microdevice

FIG. 8 is a diagram illustrating a configuration example of a microdevice according to Example 3. The microdevice has spaces 706 (which can be referred to as flow paths 706) which are spaces formed in an upper surface portion and a bottom surface portion of a substrate 705 and serve as flow paths, and includes through-hole wells 704 penetrating the substrate 705 sandwiched by the spaces 706. The left diagram of FIG. 8 is a microscopic image illustrating a top configuration of the microdevice. The right diagram of FIG. 8 is a diagram illustrating a cross-sectional configuration example of the microdevice.

As illustrated in FIG. 8 (left diagram), the microdevice includes an inlet portion 700, an area 701 where the through-hole wells are present, a port 702 where the liquid photocurable resin is folded back from the upper surface to the lower surface, and an outlet portion 703. Also, focusing on the area 701 where the through-hole wells 704 are present, the through-hole wells 704 are formed by making through-holes in the substrate 705, and the space (flow path) 706 is present on each of the upper surface and the lower surface of the through-holes. The side surface portions of the through-hole wells (fractions) 704 and the spaces (flow path portions) 706 may be subjected to a hydrophilic treatment or a hydrophobic treatment. Specifically, the side surface portions of the through-hole wells 704 may be subjected to a hydrophilic treatment, and the spaces 706 may be subjected to a hydrophobic treatment, or both may be subjected to a hydrophilic treatment.

(ii) Introduction of photocurable resin

Subsequently, the flow of the liquid photocurable resin in the microdevice according to Example 3 will be described. When the sample solution is introduced from the inlet portion 700 and injected into the through-hole wells 704, the sample solution is held in the through-hole wells 704 by surface tension. Thereafter, the liquid photocurable resin is introduced from the inlet portion 700 in the same manner as the sample solution. The introduced liquid photocurable resin passes through the space 706, and first, the liquid photocurable resin seals the upper surfaces (openings) of the through-hole wells. After sealing the upper surfaces, the liquid photocurable resin passes through the port 702 where the photocurable resin is folded back from the upper surface to the lower surface, and passes through the lower surface of the space 706. Thus, the lower surfaces (openings) of the through-hole wells 704 are sealed with the liquid photocurable resin. Excess liquid photocurable resin is discharged from the outlet portion 703. Examples of the material of the substrate 705 in which the through-holes are formed include semiconductors such as silicon, glass, resins such as cycloolefin polymer and polypropylene, and metals such as gold, silver, copper, and zinc.

(iii) PCR measurement result

FIG. 9 is a diagram illustrating a result of performing digital PCR measurement after introducing a sample solution and a liquid photocurable resin into the microdevice for biological sample analysis according to Example 3. The upper diagram of FIG. 9 is a cross-sectional view illustrating a state after the sample solution and the liquid photocurable resin are introduced into the microdevice and photocured. The lower diagram of FIG. 9 is a diagram illustrating a result of performing digital PCR measurement in this microdevice.

In the microdevice, a sample solution 801 is injected into and held in each through-hole wells 704 (see FIG. 8) formed in a substrate 800 (substrate 705). The upper and lower surfaces of the through-holes into which the sample solution 801 is injected are sealed with a solid photocurable resin 802. As a result of performing digital PCR measurement on this microdevice, as illustrated in FIG. 9, light-emitting wells 803 and non-light-emitting wells 804 were observed. Again, it is shown that the nucleic acid to be measured was introduced into the light-emitting well. Since there are the light-emitting wells 803 and the non-light-emitting adjacent wells, it can be understood that the sample solution 801 does not contaminate the surrounding wells.

Therefore, according to Example 3, it was found that the sample solution could be separated with high robustness. From this result, it became clear that highly robust sample solution separation can be performed by a method in which this device and a liquid photocurable resin are combined, and furthermore, operation with heating (for example, melting curve analysis or the like) and fluorescence measurement can be performed from digital PCR measurement.

When the openings of the wells 500 (Example 2) or the through-hole wells 704 (Example 3) containing the sample solution are sealed with a solid photocurable resin (a liquid photocurable resin is irradiated with light to be changed to a solid photocurable resin) as in Example 2 or Example 3, the refractive index of the solid photocurable resin is preferably close to the refractive index of the surrounding material (resin, solution). This is because there is an effect of preventing light emitted from the sample solution from being dissipated by the solid photocurable resin in light measurement using a microdevice. For example, in the case of a sample solution using water as a medium, since the refractive index of the sample solution is 1.3, the refractive index of the photocurable resin is preferably 1 or more and 2 or less, and as the refractive index is closer to 1.3, a clean microscopic image with less dissipation can be acquired. When the material of the substrate 800 or the substrate 705 is a resin such as polypropylene, the refractive index is around 1.5. Therefore, the refractive index of the solid photocurable resin is optimum around 1.5, and can be at least 1 or more and 2.5 or less.

<Conditions for liquid photocurable resin>

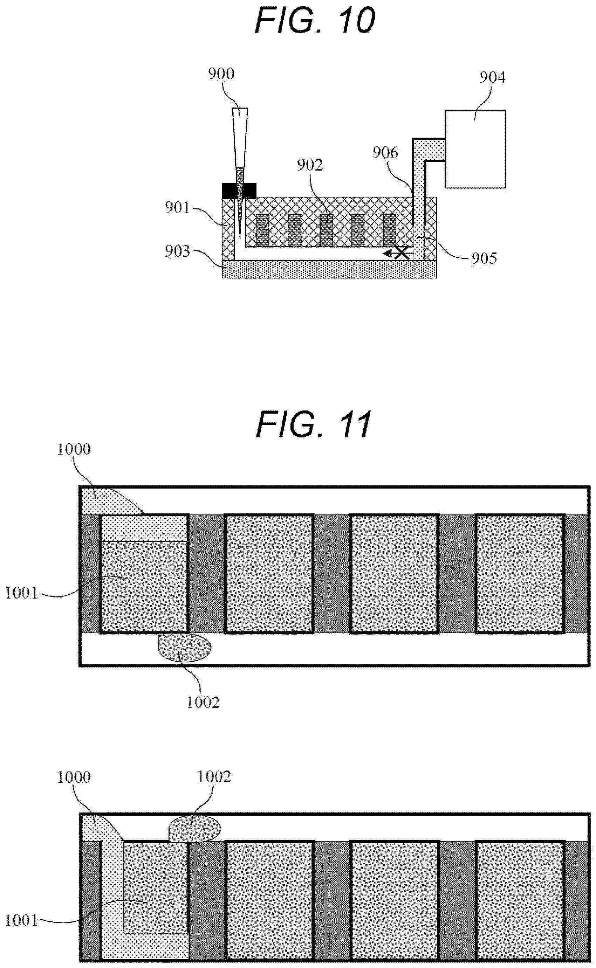

With reference to FIGS. 10 to 12, optimum conditions for the liquid photocurable resin according to the shape of flow cell will be described. By using the liquid photocurable resin satisfying the conditions according to the present disclosure, it is possible to introduce the liquid photocurable resin into the flow path in the microdevice. That is, not all commercially available liquid photocurable resins can be used, and it is necessary to confirm the specification of the liquid photocurable resin and properly use according to the shape of the microdevice or the like.

(i) Viscosity of liquid photocurable resin

FIG. 10 is a diagram for explaining that when the viscosity of the liquid photocurable resin is too high, the liquid photocurable resin is not introduced into the flow path of the microdevice. The conditions for viscosity of the liquid photocurable resin are applied to all the microdevices having the configurations shown in Examples 1 to 3 described above. Here, the conditions for viscosity of the liquid photocurable resin will be described using the microdevice having the configuration described in Example **1.**

The microdevice includes an outlet portion 900 in which a surplus sample solution is accumulated, a substrate 901, at least one well 902 into which the sample solution is introduced, and a cover 903 of the substrate. The liquid photocurable resin 905 is introduced from an inlet portion 906 of the microdevice into the microdevice using a pressure application device 904. At this time, when the viscosity of the liquid photocurable resin 905 is too high, it is difficult to introduce the liquid photocurable resin into the flow path. Therefore, when the viscosity of the liquid photocurable resin is high, it is a countermeasure to apply a strong pressure from the pressure application device 904 to introduce the photocurable resin. However, when the pressure is excessively applied, there is a possibility that bonding or the like of the prepared microdevice is peeled off and the microdevice is broken.

Therefore, the relationship between the flow rate, the pressure, and the viscosity will be described with reference to the following formulas (1) and (2). It is assumed that a liquid photocurable resin has been introduced into the microdevice under a certain condition. If the liquid photocurable resin that has been introduced is changed to a liquid photocurable resin having a viscosity of 4 times the viscosity of the liquid photocurable resin, and a similar flow rate needs to be given to the microdevice, the pressure applied to the microdevice and the liquid photocurable resin is 16 times the normal pressure. This shows that as the viscosity of the liquid photocurable resin increases, the pressure required for introduction is proportional to the square. It can also be understood that as the viscosity increases, the flow rate decreases in a relationship of 1/2 square of the difference between the required pressure and the atmospheric pressure (that is, the differential pressure). Based on these, it has been found that the viscosity of the liquid photocurable resin 905 needs to be at least 500 mPa·s or less.

$$(\text{Flow rate}) \propto (\text{Differential pressure})^{1/2}... \quad (1)$$

$$(\text{Flow rate}) \propto 1/\text{Viscosity}... \quad (2)$$

(ii) Specific gravity of liquid photocurable resin

FIG. 11 is a diagram for explaining relationship between the liquid specific gravity of the liquid photocurable resin and the sample solution. When the liquid specific gravity of the liquid photocurable resin is too high, it is difficult to introduce the liquid photocurable resin into a through-hole or a blind hole well. The conditions for liquid specific gravity of the liquid photocurable resin described below are applied to the microdevices shown in Example 2 and Example 3 (in the case of Example 1, as illustrated in FIG. 3, since the sample is introduced in the XY plane direction, the separation process is not affected by the liquid specific gravity of the liquid photocurable resin).

A sample solution 1001 in the well has a liquid specific gravity close to 1. Therefore, when a liquid photocurable resin 1000 having a high liquid specific gravity is introduced into the microdevices shown in Examples 1 to 3, the sample solution is pushed out of the well as illustrated in FIG. 11. An extruded sample solution 1002 is extruded in different directions depending on the shape of the well. For example, when the shape of the well is a blind hole (in the case of Example 2), the sample solution 1002 is extruded upward. When the shape of the well is a through-hole (in the case of Example 3), the sample solution is extruded below the well. While the sample solution is extruded, a liquid photocurable resin having a high liquid specific gravity is injected into the well. Therefore, the liquid specific gravity of the liquid photocurable resin to be used needs to be low. The value of the liquid specific gravity of the liquid photocurable resin is determined in relation to the liquid specific gravity of the sample solution, and can be, for example, the liquid specific gravity of the sample solution + 0.2 g/cm$^3$ or less. Therefore, when the liquid specific gravity of the sample solution is 1.0 g/cm$^3$, the liquid specific gravity of the liquid photocurable resin can be 1.2 g/cm$^3$ or less.

(iii) Summary of conditions for viscosity and liquid specific gravity (using commercially available liquid photocurable resins as examples)

As described above, it has been described that viscosity and liquid specific gravity are important when a liquid photocurable resin is introduced into a microdevice. Here, the conditions for viscosity and liquid specific gravity of a plurality of commercially available liquid photocurable resins will be considered.

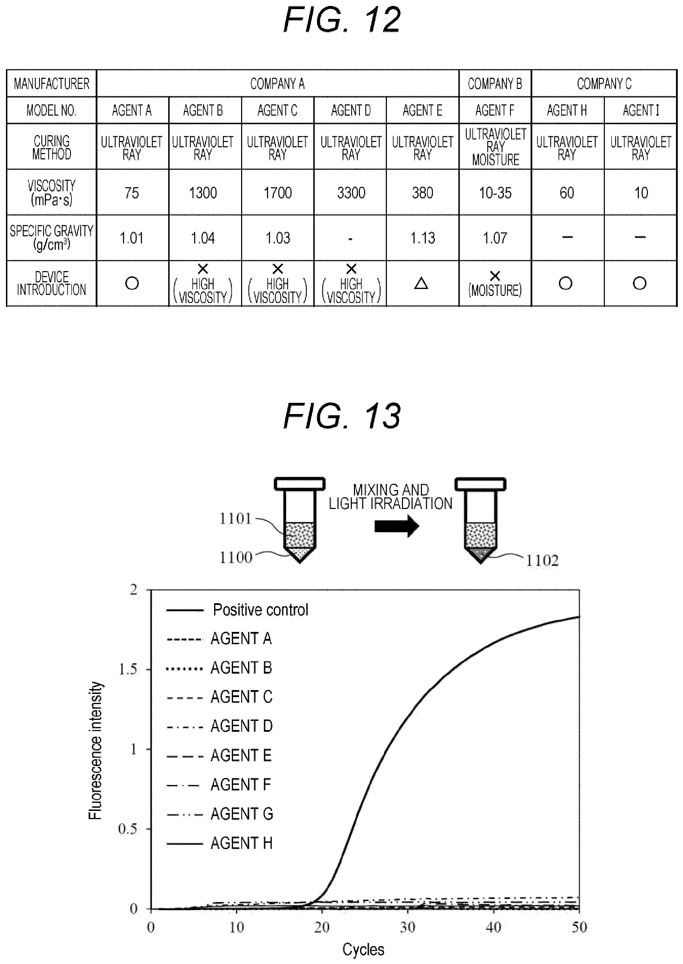

FIG. 12 is a table showing a curing method, viscosity, liquid specific gravity, and propriety of device introduction for commercially available liquid photocurable resins sold by a plurality of manufacturers. Liquid photocurable resins are often used in 3D printers and the like, and generally have high viscosity. On the other hand, many of the liquid photocurable resins satisfy the conditions for liquid specific gravity. As to the propriety of microdevice introduction of the liquid photocurable resin of each company, it is possible to introduce agent A, agent E, agent H, and agent I into the device. However, it is difficult to introduce agent B, agent C, and agent D from the viewpoint of viscosity. It is possible to introduce agent F from the viewpoint of viscosity, but there is not only an ultraviolet curing method but also a moisture curing method. When moisture curability is imparted, the liquid photocurable resin is cured at the time when the liquid photocurable resin comes into contact with the sample solution in the flow path. Therefore, a liquid photocurable resin having moisture curability is not suitable because the resin does not reach the outlet portion.

Summarizing the above, it can be understood that not all commercially available liquid photocurable resins can be used. Therefore, it can be seen that it is necessary to select the liquid photocurable resin according to the above-described conditions.

(iv) Hydrophilic liquid photocurable resin and hydrophobic liquid photocurable resin

Subsequently, conditions for the liquid photocurable resin that inhibits PCR in performing PCR or digital PCR will be described. By using the conditions for the liquid photocurable resin considered here, it is possible to perform PCR measurement and digital PCR measurement without PCR inhibition of the liquid photocurable resin introduced into the microdevice. That is, similarly to the conditions for viscosity and liquid specific gravity described above, not all commercially available liquid photocurable resins can be used, and it is necessary to select a liquid photocurable resin that does not inhibit PCR.

FIG. 13 is a diagram illustrating a scheme for evaluating the presence or absence of PCR inhibition for the commercially available liquid photocurable resins (upper diagram) and results of real-time PCR measurement (lower diagram). Referring to the upper diagram of FIG. 13, first, a scheme for evaluating PCR inhibition by real-time PCR will be described. A liquid photocurable resin 1100 and a sample solution 1101 are introduced into a PCR tube and mixed. As a result, since the liquid photocurable resin 1100 and the sample solution 1101 come into contact with each other, PCR inhibition due to a salt concentration or a pH change of the enzyme, adsorption of the nucleic acid, or the like may occur at this timing. After passing through this scheme, light irradiation is performed to change the liquid photocurable resin 1100 to a solid photocurable resin 1102. Then, real-time PCR measurement is finally performed.

The lower diagram of FIG. 13 shows the results of actually performing real-time PCR using commercially available liquid photocurable resins according to this scheme. The horizontal axis of the graph indicates the number of PCR cycles, and the vertical axis indicates fluorescence intensity. In this graph, the black line is a positive control, and is a result of performing real-time PCR only with a sample solution without introducing a liquid photocurable resin. Therefore, when the sample solution into which the liquid photocurable resin is introduced also shows the same graph shape as that of the positive control, it can be said that the sample solution is not subjected to PCR inhibition by the liquid photocurable resin (PCR inhibition does not occur). However, in the real-time PCR measurement results of the samples obtained by mixing each of the agents A to H, the same graph shapes as the graph shape of the positive control are not shown, and the graphs are flat. Therefore, it became clear that all commercially available liquid photocurable resins inhibit PCR. The labeling from the agent A to the agent H is the same as that in the table of FIG. 12. Therefore, it can be seen from this result that even a liquid photocurable resin that satisfies the conditions for viscosity and liquid specific gravity for device introduction cannot be used because it inhibits PCR. As described above, it has been described that the commercially available liquid photocurable resins shown in FIG. 12 inhibit PCR. Hereinafter, conditions for a liquid photocurable resin that hardly inhibits PCR will be described.

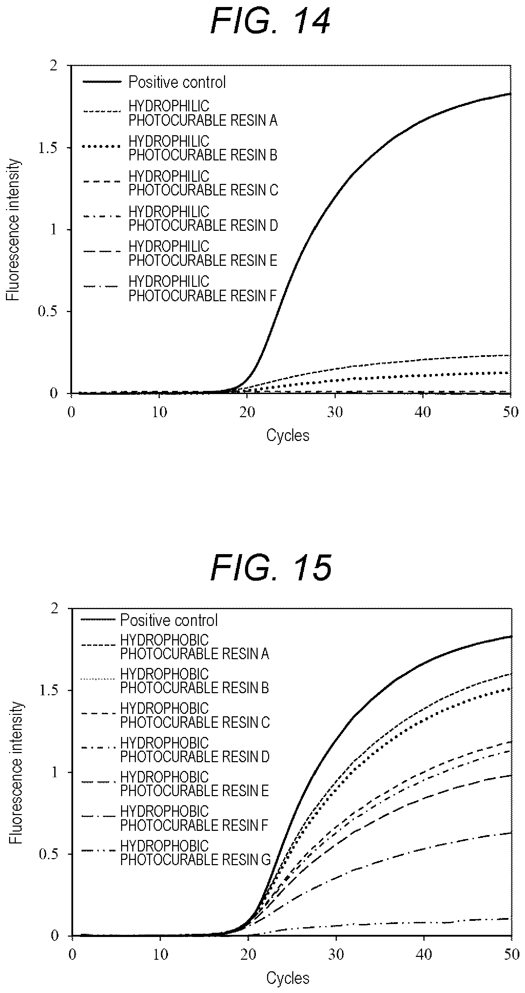

FIG. 14 is a diagram illustrating the results of real-time PCR measurement for evaluating the presence or absence of PCR inhibition for hydrophilic liquid photocurable resins. Here, hydrophilicity means that the liquid photocurable resin has high solubility in water, and hydrophobicity means that the liquid photocurable resin has low solubility in water. Therefore, the hydrophilic liquid photocurable resin shows high compatibility with water, and the hydrophobic liquid photocurable resin shows low compatibility (hardly soluble or hardly mixed) with water. Referring to FIG. 14, it can be seen that the shapes of the characteristics of each hydrophilic liquid photocurable resins are not as low as the characteristics shown in FIG. 13, but are significantly different from the shape of the positive control. Therefore, from the real-time PCR measurement results using the hydrophilic liquid photocurable resins, it can be seen that PCR inhibition does not occur as much as the commercially available liquid photocurable resins, but PCR inhibition tends to occur even with the hydrophilic liquid photocurable resins.

FIG. 15 is a diagram illustrating the results of real-time PCR measurement for evaluating the presence or absence of PCR inhibition for hydrophobic liquid photocurable resins. Referring to FIG. 15, in the real-time PCR measurement results in the case of using hydrophobic liquid photocurable resins, it is clear that the influence of PCR inhibition is lower than that of the commercially available liquid photocurable resins or the hydrophilic liquid photocurable resins. In addition, the shapes of the real-time PCR measurement results also show substantially the same shapes as the black line of the positive control. Therefore, it became clear that the use of a hydrophobic liquid photocurable resin is effective in real-time PCR measurement and digital PCR measurement.

In summary, it is preferable to use a hydrophobic liquid photocurable resin instead of a hydrophilic liquid photocurable resin in order not to receive (occur) PCR inhibition. As a condition for the hydrophobic (hardly soluble) liquid photocurable resin, it is important to have a solubility in water of 100 g/L or less. This is an index indicating compatibility with water, and when the hydrophobic liquid photocurable resin has a solubility in water of 100 g/L or less, it can be said as hardly soluble. As the molecular structure of the resin, for example, a resin in which a hydroxyl group or the like is not present in the molecular skeleton can be used in order to exhibit poor solubility to water. Among them, focusing on the molecular skeleton of the liquid photocurable resin, when the liquid photocurable resin is composed of a cycloalkane, a normal alkane having 6 or more carbon atoms, an isoalkane, or the like, hydrophobic characteristics are easily exhibited. Therefore, a liquid photocurable resin having such a structure can be used. In fact, in the microdevices subjected to digital PCR in Examples 1 to 3, a hydrophobic liquid photocurable resin can be used as the liquid photocurable resin. Therefore, the hydrophobic liquid photocurable resin can be used in both real-time PCR and digital PCR. When considered from the viewpoint of viscosity, molecules of the liquid photocurable resin mainly composed of a monomer instead of an oligomer may be adopted.

From the above, as to the liquid photocurable resin, it is important to have viscosity, liquid specific gravity, and hydrophobicity (be hardly soluble) in the case of the configuration of the microdevices as shown in Examples 2 and 3, whereas it is important to have viscosity and hydrophobicity in the case of the configuration of the microdevice as shown in Example 1.

<Sample solution separation apparatus>

Here, an outline of a sample solution separation apparatus using a microdevice for biological sample analysis and a liquid photocurable resin will be described. By using the sample solution separation apparatus, sample solution separation using a liquid photocurable resin can be performed on the apparatus.

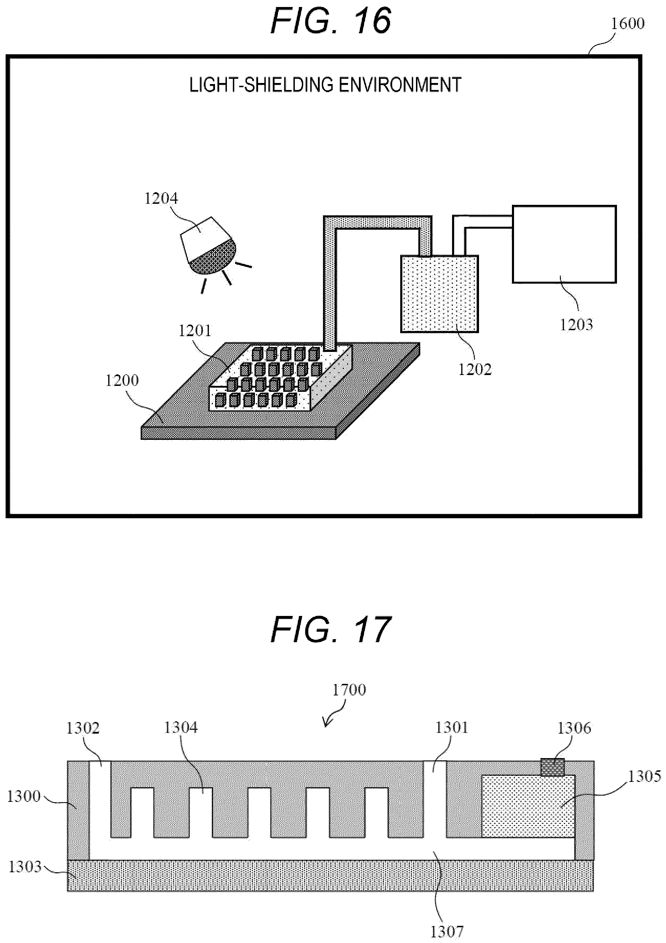

FIG. 16 is a diagram illustrating a schematic configuration example of a sample solution separation apparatus 1600. The sample solution separation apparatus 1600 includes a sample positioning unit 1200, a microdevice for biological sample analysis 1201 mounted on the sample positioning unit 1200, a photocurable resin storing unit 1202 that holds a liquid photocurable resin, a pressure application device 1203, and a light source unit 1204 in a light-shielding environment. The microdevice for biological sample analysis 1201 is connected to the pressure application device 1203 via the photocurable resin storing unit 1202. In the sample solution separation apparatus 1600, when the pressure application device 1203 applies pressure, the liquid photocurable resin is introduced from the photocurable resin storing unit 1202 into the microdevice for biological sample analysis 1201.

When all the wells in the microdevice for biological sample analysis 1201 are sealed with the liquid photocurable resin, the light source unit 1204 irradiates the microdevice for biological sample analysis 1201 with light. By this light, all the liquid photocurable resin in the microdevice for biological sample analysis 1201 is solidified, and highly robust sample solution separation becomes possible. The light source unit 1204 or the sample positioning unit 1200 may have a drive mechanism, and this drive mechanism enables position-selective solidification of the liquid photocurable resin.

In the sample solution separation apparatus 1600, since it is necessary to store the liquid photocurable resin in the apparatus, an environment that shields light from the outside (light-shielding environment) is required. However, in a case where it is difficult to create the light-shielding environment, the photocurable resin storing unit 1202 may be replaced with a black container.

According to the sample solution separation apparatus 1600, it is possible to separate the sample solution. By further improving the sample positioning unit 1200 and the light source unit 1204, it is also possible to utilize as various derivative devices. For example, by additionally installing a heat source unit such as a thermal cycler in the sample positioning unit 1200, PCR or digital PCR in the microdevice for biological sample analysis 1201 after sample solution separation becomes possible. Further, the sample solution or the liquid photocurable resin may be introduced while the microdevice for biological sample analysis 1201 is heated in a range of about 90°C from room temperature using the heat source unit. This makes it possible to slightly reduce the viscosity of the liquid photocurable resin which is the above-described problem. In addition, by additionally installing an excitation light source of a plurality of wavelengths, an excitation light filter, a fluorescent filter, a dichroic mirror, a condenser lens, and a photodetector such as a CCD or a CMOS camera in the light source unit 1204, fluorescence measurement of the microdevice for biological sample analysis 1201 after PCR becomes possible.

<Improved microdevice>

Improvement of the microdevices for biological sample analysis of Examples 1 to 3 will be described. FIG. 17 is a diagram illustrating a schematic cross-sectional configuration example of an improved microdevice. The improved microdevice relates to a sample solution separation package 1700 including a liquid photocurable resin. By using the sample solution separation package, a user does not need to prepare a liquid photocurable resin for separating the sample solution, and it is possible to separate the sample solution by the liquid photocurable resin only by directly connecting the microdevice to a pressure application device or the like.

As illustrated in FIG. 16, a sample solution separation package (improved microdevice) 1700 includes a substrate 1300, an inlet portion 1301 into which a sample solution is introduced, an outlet portion 1302 from which the sample solution and a liquid photocurable resin are discharged, a cover 1303, wells 1304 into which the sample solution is introduced, a photocurable resin storing unit 1305, and a pressure application hole 1306.

As in Examples 1 to 3, the sample solution is introduced from the inlet portion 1301 and introduced into the wells 1304. After the sample solution is introduced into the wells 1304, pressure is applied from the pressure application hole 1306 using an external device (pressure application device), and the liquid photocurable resin held in the photocurable resin storing unit 1305 is introduced into a flow path 1307 in the package to seal each well 1304. Then, photocuring is finally performed by an external light source. As described above (see FIG. 16), the periphery of the photocurable resin storing unit 1305 in the sample solution separation package (improved microdevice) 1700 is preferably a light-shielding environment.

<Summary>

(i) According to the present embodiment, there has been proposed a highly robust sample solution separation technique for preventing a sample solution introduced into a plurality of wells (fractions) of a microdevice used for digital PCR or real-time PCR from leaking from each well. Specifically, first, a sample solution is introduced into a plurality of wells (fractions) of the microdevice for biological sample analysis, and subsequently, a liquid photocurable resin is introduced into a flow path of the microdevice for biological sample analysis. As a result, the liquid photocurable resin covers openings of the plurality of fractions, and the sample solution held in the plurality of fractions is separated. Then, the microdevice for biological sample analysis into which the liquid photocurable resin has been introduced is irradiated with light to solidify the liquid photocurable resin. This ensures separation of the sample solution retained in each fraction.

The form of the plurality of fractions varies. For example, in the case of Example 1, as illustrated in FIG. 3, the microdevice includes a main flow path connected from the inlet portion to the outlet portion, and a plurality of sub flow paths connected from the main flow path to each fraction. In this case, first, the sample solution is poured into each of the plurality of fractions via the inlet portion, the main flow path, and the sub flow path. Subsequently, the liquid photocurable resin is poured from the inlet portion into the main flow path, and the plurality of fractions are separated. In the case of Example 2, as illustrated in FIG. 6, the microdevice includes a plurality of wells (fractions) 500 formed in the substrate and having one surface opened, and the flow paths 501 formed so as to connect openings of the wells. In the case of Example 3, the microdevice has a plurality of through-holes formed in the substrate and has these as fractions. That is, as illustrated in FIG. 8, the microdevice includes a plurality of through-holes (fractions) 704 formed in the substrate, and flow paths 706 formed so as to connect upper and lower openings of the through-holes. In this case, the sample solution is poured into the opened wells, and subsequently, the liquid photocurable resin is poured into the flow paths 501 or the flow paths 706. This allows the openings of the opened wells (Example 2: openings of the upper surface; Example 3: upper and lower openings of through-holes) being covered.

(ii) According to the present embodiment, the liquid photocurable resin used for sample solution separation can have a specific gravity of the sample solution + 0.2 g/cm$^3$ or less. This makes it possible to avoid a situation in which the sample solution and the liquid photocurable resin are mixed in the microdevice, or the liquid photocurable resin enters the well (fraction) and pushes out the sample solution held and stored in the well (fraction). The conditions for liquid specific gravity of the liquid photocurable resin are applied when the sample solution separation treatment is performed using the microdevice having the configuration of Example 2 or Example 3 above.

The liquid photocurable resin preferably has a viscosity of 500 mPa·s or less. This enables smooth introduction into the microdevice without applying a pressure large enough to destroy the microdevice. In consideration of viscosity, the liquid photocurable resin may be a resin mainly composed of a monomer instead of an oligomer.

The liquid photocurable resin is hardly soluble in water, and has a solubility in water of 100 g/L or less in terms of solubility in water. The liquid photocurable resin may be composed of a material having a cycloalkane, a normal alkane having 6 or more carbon atoms, or an isoalkane in a molecular skeleton. This makes it possible to make the property of the liquid photocurable resin hydrophobic and to prevent occurrence of PCR inhibition.

The liquid photocurable resin can have a refractive index of 1 or more and 2.5 or less. This makes it possible to prevent the occurrence of a situation in which light emitted from the sample solution is dissipated by the photocurable resin. The liquid photocurable resin has low autofluorescence properties for light in a wavelength band of 400 nm to 700 nm. As a result, the background intensity due to autofluorescence is suppressed at the time of PCR measurement, and highly accurate PCR measurement is enabled.

The wavelength of the light emitted from the light source and solidifying the liquid photocurable resin is light in a wavelength band of 250 nm to 600 nm. By irradiating light in the vicinity of the absorption wavelength of a photoinitiator contained in the liquid photocurable resin, a photopolymerization reaction can be promoted.

(iii) As illustrated in FIG. 16, the present embodiment also proposes a microdevice having a novel configuration. Specifically, the microdevice is a sample solution separation device used for biological sample analysis, and includes a substrate, an inlet portion and an outlet portion formed in the substrate, a plurality of wells (fractions) formed in a substrate portion between the inlet portion and the outlet portion, and a photocurable resin storing unit formed in the substrate. A pressure application hole for applying pressure for discharging the stored liquid photocurable resin from the photocurable resin storing unit is formed in the photocurable resin storing unit. As described above, by storing the liquid photocurable resin in the microdevice, it becomes unnecessary for the user to specially prepare the liquid photocurable resin, and it becomes possible to provide a user-friendly microdevice.

(iv) The technology of the present disclosure is not limited to the above examples, and includes various modifications. For example, the above examples are described in detail to easily understand the technology of the present disclosure, and the invention is not necessarily limited to the examples having all configurations described above. In addition, a portion of the configuration of an example can be substituted by the configuration of another example, and also, the configuration of another example can be added to the configuration of an example. Furthermore, another configuration can be added to, removed from, and substituted for a portion of the configuration of each example.

Reference Signs List

    1, 107, 1204 light source (unit)
    2, 101, 502, 603, 705, 800, 901, 1300 substrate
    3 coating layer
    4, 105, 304, 905, 1100 liquid photocurable resin
    5 photoinitiator
    6 polymer structure
    100, 703, 900, 1302 outlet portion
    102, 202, 300, 500, 601, 902, 1304 well
    103, 903, 1303 cover
    104, 904, 1203 pressure application device
    106, 200, 700, 906, 1301 inlet portion
    108, 305, 400, 600, 802, 1102 solid photocurable resin
    201 main flow path portion
    203 sub flow path portion
    501, 604, 1307 flow path (portion)
    301 interface between sample solution and liquid photocurable resin on flow path
    302 interface between sample solution in well and liquid photocurable resin in flow path
    303, 401, 602, 801, 1101 sample solution
    306 interface between sample solution in well and solid photocurable resin in flow path
    402, 605, 803 light-emitting well
    403, 606, 804 non-light-emitting well
    701 area where through-hole well is present
    702 port where photocurable resin is folded back from upper surface to lower surface
    704 through-hole well
    706 flow path (space)
    1000 liquid photocurable resin having high liquid specific gravity

1001 sample solution in well
1002 extruded sample solution
1200 sample positioning unit
1201 microdevice for biological sample analysis
1202, 1305 photocurable resin storing unit
1306 pressure application hole
1600 sample solution separation apparatus
1700 sample solution separation package (improved microdevice)

**Claims**

1. A sample solution separation method in a microdevice for biological sample analysis, the method comprising the steps of:

   introducing a sample solution into a plurality of fractions included in the microdevice for biological sample analysis;
   introducing a liquid photocurable resin into a flow path of the microdevice for biological sample analysis and covering openings of the plurality of fractions with the liquid photocurable resin to separate the plurality of fractions into which the sample solution has been introduced; and
   irradiating the microdevice for biological sample analysis into which the liquid photocurable resin has been introduced with light to solidify the liquid photocurable resin.

2. The sample solution separation method according to claim 1, wherein
   the microdevice for biological sample analysis is used for digital PCR or real-time PCR.

3. The sample solution separation method according to claim 1, wherein
   the plurality of fractions are through-holes formed in a substrate of the microdevice for biological sample analysis.

4. The sample solution separation method according to claim 1, wherein

   each of the plurality of fractions is a well in which at least one of a first surface or a second surface facing the first surface is opened, and
   the step of introducing the sample solution includes a step of pouring the sample solution into the opened well, and
   the step of separating the plurality of fractions includes, after pouring the sample solution into the opened well, pouring the liquid photocurable resin into the flow path of the microdevice for biological sample analysis to cover an opening of the opened well.

5. The sample solution separation method according to claim 3 or 4, wherein
   a specific gravity of the liquid photocurable resin is a specific gravity of the sample solution + 0.2 g/cm$^3$ or less.

6. The sample solution separation method according to claim 1, wherein

   the microdevice for biological sample analysis includes a main flow path connected from an inlet portion to an outlet portion, and a plurality of sub flow paths connected from the main flow path to each fraction,
   the step of introducing the sample solution includes a step of pouring the sample solution into each of the plurality of fractions via the inlet portion, the main flow path, and the sub flow path, and
   the step of separating the plurality of fractions includes, after pouring the sample solution into the plurality of fractions, a step of separating the plurality of fractions by pouring the liquid photocurable resin from the inlet portion into the main flow path.

7. The sample solution separation method according to claim 1, wherein
   the liquid photocurable resin has a viscosity of 500 mPa·s or less.

8. The sample solution separation method according to claim 7, wherein
   the liquid photocurable resin is composed of a monomer material.

9. The sample solution separation method according to claim 1, wherein

the liquid photocurable resin is hardly soluble in water.

10. The sample solution separation method according to claim 9, wherein
the liquid photocurable resin has a solubility in water of 100 g/L or less.

11. The sample solution separation method according to claim 9, wherein
the liquid photocurable resin is composed of a hydrophobic material having a cycloalkane, a normal alkane having 6 or more carbon atoms, or an isoalkane in a molecular skeleton.

12. The sample solution separation method according to claim 1, wherein
the liquid photocurable resin has a refractive index of 1 or more and 2.5 or less.

13. The sample solution separation method according to claim 1, wherein
the liquid photocurable resin has low autofluorescence properties for light in a wavelength band of 400 to 700 **nm.**

14. The sample solution separation method according to claim **1,** wherein
the light for solidifying the liquid photocurable resin is light in a wavelength band of a wavelength of 250 to 600 **nm.**

15. A sample solution separation device used for biological sample analysis, the device comprising:

a substrate;
an inlet portion formed in the substrate for introducing a sample solution;
an outlet portion formed in the substrate for discharging at least an excess sample solution;
a plurality of fractions formed in the substrate and holding a sample solution to be introduced; and
a photocurable resin storing unit that is formed in the substrate and stores a liquid photocurable resin,
wherein a pressure application hole for applying pressure for discharging the stored liquid photocurable resin from the photocurable resin storing unit is formed in the photocurable resin storing unit.

16. A sample solution separation apparatus configured to separate a sample solution introduced into a plurality of fractions of a microdevice for biological sample analysis, the apparatus comprising:

a device mounting unit on which the microdevice for biological sample analysis is mounted;
a photocurable resin storing unit configured to store a liquid photocurable resin to be introduced into the microdevice for biological sample analysis after the sample solution is introduced into the plurality of fractions;
a pressure application device configured to apply pressure to the photocurable resin storing unit and introduce the liquid photocurable resin into the microdevice for biological sample analysis; and
a light irradiation unit configured to irradiate the liquid photocurable resin introduced into the microdevice for biological sample analysis with light.

## FIG. 1

LIQUID

PHOTOPOLYMERIZATION
REACTION

SOLID

## FIG. 2

INTRODUCTION
OF LIQUID
PHOTOCURABLE RESIN

PHOTOPOLYMERIZATION
REACTION

SEALING BY
SOLIDIFICATION OF
PHOTOCURABLE RESIN

# FIG. 3

# FIG. 4

# FIG. 5

## FIG. 6

# FIG. 7

# FIG. 8

# FIG. 9

# FIG. 10

# FIG. 11

## FIG. 12

| MANUFACTURER | COMPANY A | | | | | COMPANY B | COMPANY C | |
|---|---|---|---|---|---|---|---|---|
| MODEL NO. | AGENT A | AGENT B | AGENT C | AGENT D | AGENT E | AGENT F | AGENT H | AGENT I |
| CURING METHOD | ULTRAVIOLET RAY | ULTRAVIOLET RAY | ULTRAVIOLET RAY | ULTRAVIOLET RAY | ULTRAVIOLET RAY | ULTRAVIOLET RAY MOISTURE | ULTRAVIOLET RAY | ULTRAVIOLET RAY |
| VISCOSITY (mPa·s) | 75 | 1300 | 1700 | 3300 | 380 | 10-35 | 60 | 10 |
| SPECIFIC GRAVITY (g/cm³) | 1.01 | 1.04 | 1.03 | - | 1.13 | 1.07 | — | — |
| DEVICE INTRODUCTION | ○ | × (HIGH VISCOSITY) | × (HIGH VISCOSITY) | × (HIGH VISCOSITY) | △ | × (MOISTURE) | ○ | ○ |

## FIG. 13

Positive control
AGENT A
AGENT B
AGENT C
AGENT D
AGENT E
AGENT F
AGENT G
AGENT H

## FIG. 14

## FIG. 15

# FIG. 16

1600

LIGHT-SHIELDING ENVIRONMENT

1204

1201

1200

1202

1203

# FIG. 17

1700

1302  1304  1301  1306

1300

1303

1305

1307

**EP 4 632 387 A1**

## INTERNATIONAL SEARCH REPORT

| International application No. |
| --- |
| **PCT/JP2022/045024** |

| A. | CLASSIFICATION OF SUBJECT MATTER |
| --- | --- |

*G01N 37/00*(2006.01)i; *G01N 35/02*(2006.01)i
FI:  G01N35/02 A; G01N35/02 B; G01N37/00 101

According to International Patent Classification (IPC) or to both national classification and IPC

| B. | FIELDS SEARCHED |
| --- | --- |

Minimum documentation searched (classification system followed by classification symbols)

G01N37/00; G01N35/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2005-506541 A (NTU VENTURES PTE. LTD.) 03 March 2005 (2005-03-03) fig. 1-5 | 1-16 |
| A | WO 2011/149032 A1 (TOSOH CORP.) 01 December 2011 (2011-12-01) entire text, all drawings | 1-16 |
| A | JP 2016-163549 A (CHUO UNIV.) 08 September 2016 (2016-09-08) entire text, all drawings | 1-16 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 January 2023** | **21 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

26

INTERNATIONAL SEARCH REPORT
Information on patent family members

International application No.

PCT/JP2022/045024

| Patent document cited in search report | | | Publication date (day/month/year) | Patent family member(s) | | | Publication date (day/month/year) |
|---|---|---|---|---|---|---|---|
| JP | 2005-506541 | A | 03 March 2005 | WO 2003/035229 fig. 1-5 | A2 | | |
| WO | 2011/149032 | A1 | 01 December 2011 | US 2013/0118905 entire text, all drawings | A1 | | |
| JP | 2016-163549 | A | 08 September 2016 | (Family: none) | | | |

Form PCT/ISA/210 (patent family annex) (January 2015)

## REFERENCES CITED IN THE DESCRIPTION

**Patent documents cited in the description**

- JP 2018108063 A
- JP 2011163946 A
- WO 2008146754 A
- US 9518299 B2